# EUROPEAN PATENT APPLICATION

(11) **EP 1 947 060 A1**
(43) Date of publication of application: **23.07.2008**
(21) Application number: 07100771.0
(22) Date of filing: 18.01.2007
(51) Int. Cl.: C02F 1/461

(54) **Water supply system and method**

(71) Applicant: Holland Environment B.V., 4191 PL Geldermalsen (NL)
(72) Inventor: Pool, Wieberen, 9728 RC Groningen (NL)
(74) Representative: van Loon, C.J.J.

(57) **Abstract**

A water supply system supplies water to a water distribution system that draws a variable flow of water. To counteract micro-organisms silver is released into the water by pair of silver electrodes in a water conduit of the supply system. A parameter is measured that is indicative for water flow rate through the conduit. The average electric current supplied to the silver electrodes is controlled in proportion to the measured water flow rate. The polarity of a voltage difference applied between the silver electrodes is repeatedly reversed. To control the time of reversal a charge is computed that has been cumulatively applied to the silver electrodes since a previous polarity reversal of the voltage difference. The polarity of the voltage difference is reversed when the computed charge has reached a predetermined threshold.

## Description

The invention relates to a water supply system wherein metal ions are added.

US patent 6,800,206 (Robinson) describes a water supply system comprising copper electrodes, a water flow meter and a control circuit configured to control the electric current to the electrodes in proportion on the value of the water flow measured by the flow meter.

It is known to add metal ions such as copper and silver ions in small amounts to water in order to inhibit growth of micro-organisms such as the bacteria that cause legionella disease. It is known to add such ions electrolytically by including copper and silver electrodes in water conduits. For health reasons it is necessary that the concentration of ions remains below a threshold level if the water is to be used as drinking water. Therefore, preferably the average amount of electrical current supplied to such electrodes is adapted dependent on flow rate (or alternatively the water flow rate is kept at a level compatible with the electric current).

Unfortunately, electrodes used in electrolysis tend to scale. While metal ions are released into the water from the electrode of one polarity, the electrode for the opposite polarity produces hydroxy ions that lead to scale. It is known to combat this problem by periodic reversal of the polarity of the electrodes.

However, it has been found that the polarity reversal leads to less efficient release of ions. In particular silver ions, which have to be released at very low concentration, are often not released effectively in this way.

Among others, it is an object of the invention to provide for a water supply system wherein scaling is counteracted with less reduction of efficiency of release of ions into the water.

A water supply system according to claim 1 and a method of supplying water are provided. Herein silver ions are added to the water stream from a pair of silver electrodes. The average current to the pair of silver electrodes is controlled in proportion to a measured indication of water flow rate, obtained for example from a water flow meter that measures water flow rate to an output of the water supply system, or through a branch that draws water flow in proportion to the water flow rate at the output. Thus, the system is capable of handling a variable water demand downstream.

The polarity of a voltage difference that is applied between the silver electrodes is repeatedly reversed, the time point of reversal being selected based on a computed charge that has been cumulatively applied to the silver electrodes since a previous polarity reversal of the voltage difference. Typically only a very low concentration of silver ions has to be realized with a correspondingly low average current to the silver electrodes. The low current has the effect of prolonging a period of ineffectivity after polarity reversal. The number of periods with loss of effectivity can be minimized by controlling the time of polarity reversal on the basis of computed cumulative charge.

In an embodiment the average current is controlled by controlling a fraction of time during which a voltage difference is applied between the silver electrodes. Thus, for example the frequency of applied voltage pulses may be controlled. The current that flows to the silver electrodes during the pulses is measured. This current may depend on the properties of the water among others. The fraction of time of voltage application is controlled dependent on the measured current in order to realize an average current proportional to measured flow. In this case the time points of polarity reversal do not merely depend on the time during which a voltage difference has been applied, but the time points are also affected by the measured current.

In addition the water supply system may also comprise a pair of copper electrodes. In this case a higher average current is applied to the copper electrodes than across the silver electrodes. Polarity of reversals of a voltage difference applied across the copper electrodes are provided at a higher frequency than reversals of the voltage difference applied across the silver electrodes. By thus decoupling the polarity reversals it is avoided that the effectivity of the silver electrodes is decreased. Voltage polarity reversal at the copper electrodes may be controlled in a similar way as for the silver electrodes, or a periodic reversal may be used, since the periods of ineffectivity of these copper electrodes are shorter due to the higher average current.

These and other objects and advantageous aspects will become apparent for a description of exemplary embodiments, using the following figures.
Figure 1 shows a water supply system
Figure 2 shows a plot of cumulative charge versus time

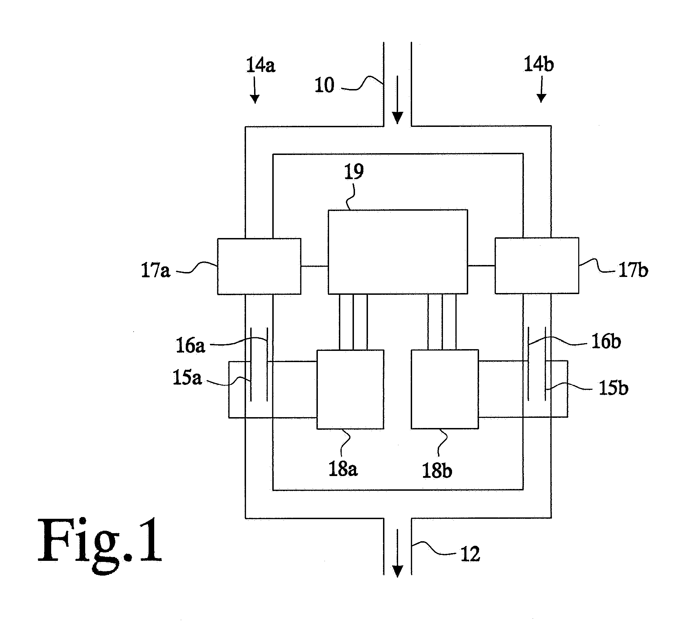

Figure 1 shows a water supply system comprising a water input 10 and a water output 12 coupled by two water conduit branches 14a,b, each branch comprising electrodes 15a,b, 16a,b and a flow meter 17a,b. Electrodes 15a, 16a in first branch 14a are made of copper and electrodes 15b, 16b in second branch 14b are made of silver. The water supply system further comprises a first and second power voltage source 18a,b and a control circuit 19. Voltage sources 18a,b are configured to apply pulses of voltage difference across the pairs of electrodes in branches 14a,b. The pulses may have a predetermined pulse duration and a controllable frequency or more generally a controllable duty cycle with optionally variable pulse duration. First and second voltage source 18a,b each have a polarity control input and a current level control or pulse on/off or pulse frequency or duty cycle control input. Outputs of first voltage source 18a are coupled to the electrodes in first branch 14a and outputs of second voltage source 18a are coupled to the electrodes in second branch 14b. Furthermore first and second voltage source 18a,b each have a current monitoring output (outputting e.g. a voltage over a resistance (not shown) in series with electrodes). Control circuit 19 has inputs coupled to flow meters 17a,b, inputs coupled to the current monitoring outputs of voltage sources 18a,b and outputs coupled to the inputs of each of voltage sources 18a,b.

In operation water flows from water input 10 to water output 12 through branches 14a,b. Typically various water drawing devices (not shows), such as taps, showers etc. are connected downstream of water output 12. The volume of water flow through branches 14a,b is variable because it depends on the amount of water drawn by the water drawing devices downstream from water output 12.

Flow meters 17a,b measure water flow rate through the branches 14a,b and signal the measured flow rate to control circuit 19. First and second voltage source 18a,b apply voltage pulses of predetermined length between electrodes 15ab, 16a,b and signal the resulting current to control circuit 19. Control circuit 19 controls voltage sources 18a,b to adapt the frequency of pulses in proportion to the ratio between the measured flow rate and the measured electrode current for each branch 14a,b. This is done to provide predetermined concentrations of copper and silver in the water flowing to water output 12.

The concentration of silver is made much lower than that of copper. In an example a copper concentration of 400 mg or 6,3 millimol per cubic meter is provided for and a silver concentration of 40 mg or 0,37 millimol per cubic meter. As is well known under stationary process conditions the amount of copper and silver ions released per unit time is proportional to the average current or Faraday current between electrodes 15a,b, 16a,b. To release one mol or one valent silver (107,9 g) 96485 ampere.seconds or one Faraday is needed. To release one mol of two valent copper (63,5 g) 2 Faraday is needed. The average current is determined by the pulse frequency (or duty cycle) and the detected current in each pulse. To realize the higher copper concentration control circuit 19 typically makes the pulse frequency (or duty cycle) in the first branch 14a higher than the pulse frequency in second branch 14b.

At selected time points control circuit 19 controls voltage sources 18a,b the change the polarity of the applied voltages. This is done to prevent electrode scaling. Unfortunately, polarity reversal has the effect that temporarily less of the electric current between electrodes 15a,b, 16a,b contributes to release of copper or silver ions. The part of the electric current that does not contribute to the release of ions is called non-Faraday current. This current contributes to charge the electrode surfaces and depends on the area of the electrode surface. A temporary peak in the non-Faraday current at constant voltage occurs after polarity reversal. In terms of an electrical model the effect is as if a condensator must be charged. The non-Faraday current to charge the electrode surface in terms of Farad per m2 represents a loss of efficiency in the proportional relation between current and waterflow. Under laboratory circumstances it is possible to estimate after a polarity reversal the change in impedance of the electrode pairs of copper and silver during a time period at constant voltage between the electrodes or at constant current through by respectively current through the electrodes and voltage between the electrodes. The results of these measurements make it possible to calculated the non Faraday current necessary to charge electrode surface. Measurements with constant voltage between the electrode pairs and polarity reversals per 50 seconds in tap water result in capacity values of 20 - 40 µF/cm2. (Similar values are found in the literature.) The estimation of the capacity part of the impedance of e.g. the electrode pair also make possible to calculate the amount of non Faraday current and supply these amount of ampere.seconds in a relatively short time to the electrodes.

However under working conditions at different water flow rates, temperature, chemical composition and the changing of the electrode surfaces, the Faraday compensation in a short time can lead in a short period to an excessive release of silver and copper ions and e.g. to undesirable precipitation of black coloured silver complexes or poisonous copper and silver concentrations. Without complex compensation measures the non-Faraday current also represents a temporary reduction of the number of released ions. This duration of this reduction is longer (more significant) in the case of silver release than for copper, due to the lower average current for releasing silver especially at low flowrates. Therefore it is desirable to minimize the number of polarity reversals especially for the silver electrodes. The rate of scaling on the electrodes depends on the production of hydroxy ions and the chemical composition of the water. At low current flow e.g. to release silver ions the polarity reversals per time unit can be less then at high current flow.

Control circuit 19 is designed to minimize the number of polarity reversals. Controls voltage sources 18a,b computes an indication of the cumulatively applied charge (Faraday and non Faraday current) that has flown from each electrode pair or pairs since the last previous polarity reversal for that electrode pair. Computation of the cumulatively applied charge can be performed by integrating the average current. In an embodiment control circuit 19 computes an indication of the cumulatively applied charge for each branch 14a,b by summing the electrode currents measured in that branch. Other methods of computation may be used, e.g. by counting down from a starting value until a zero value is reached. Also, because the average current is controlled to be proportional to the water flow rate an indication of the cumulatively supplied volume of water since the last polarity reversal may be used as an indication of cumulatively applied charge.

When control circuit 19 detects that the computed indication of the cumulatively applied charge for a branch 14a,b has reached a predetermined threshold level for that branch, control circuit signals the voltage source 18a,b for that branch to reverse polarity henceforth and resets the indication of the cumulatively applied charge for that branch 14a,b to zero.

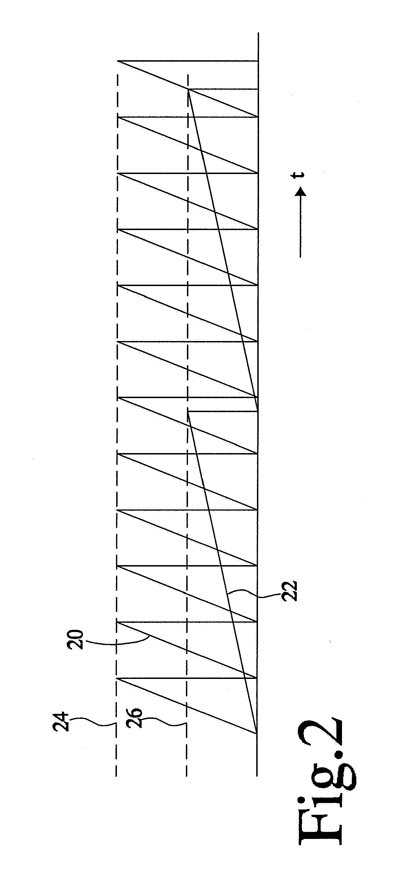

Figure 2 illustrates the indication of the cumulatively applied charge at the electrodes as a function of time. A first trace 20 indicates the cumulatively applied charge from the copper electrodes. A second trace 22 indicates the cumulatively applied charge from the silver electrodes. The polarity of the voltage applied to the electrodes is reversed when the trace reaches the relevant threshold 24, 26. As may be noted the indication is reset to zero upon polarity reversal. Furthermore, it may be noted that the polarity is reversed more frequently at the copper electrodes than at the silver electrodes. This is due to the fact that the average current delivered by the copper electrodes is higher than that at the silver electrodes, because a lower concentration is required for silver than for copper.

The predetermined threshold is preferably set to the highest value that still ensures that the electrodes will not scale. In an embodiment the threshold may be set somewhat lower so that a safety margin is provided. The exact value can be selected experimentally, for example, in an experiment wherein it is observed the whether scaling occurs and the indication of the cumulatively applied charge at that time is read.

It should be appreciated that described embodiment is merely an example of one possible embodiment. For example, although it has been described that voltage pulses of predetermined length are applied between the electrodes (e.g. of 1 millisecond length), and that the frequency of the pulses is adapted it should be appreciated that alternatively the length of the pulses may be adapted, or a combination of pulse length and frequency. Also a time dependent voltage may be delivered during a pulse, or current source circuits or any other electrode supply circuits may be used instead of the voltage sources. In theory the voltage value could be controlled to realized a desired current value, but in view of the very low desired copper and silver concentrations it is preferred to use a method of control that controls the size of a fraction of time wherein voltage is supplied, such as by control of the frequency of pulses.

The electrode supply circuit may even be time-shared for the silver and copper electrodes, a same supply output being connected to a silver electrode and a copper electrode at different time points. Pulse frequency adaptation may be performed by controlling the time period between pulses, or by selectively suppressing pulses so that pulses occur at a selected average rate, although possibly not strictly periodically. What counts is the average electric current in proportion to water flow rate and the average electric current integrated over time. In each case these quantities are used to control the average current and time point of polarity reversal respectively.

Furthermore, although an embodiment has been shown with parallel branches 14a,b, it should be noted that alternatively the electrode pairs may be used in series in one channel. In such an embodiment, one flow meter suffices, but a more complicated arrangement may be needed to avoid cross-current between the electrode pairs. Also when two parallel branches are used, one flow meter may suffice, when it may be assumed that water flows in fixed proportion through the branches. The parallel branches need not have the same size (and therefore the same flow rate). In an embodiment the branch with the silver electrode is advantageously constructed to have a smaller flow rate than the branch with the copper electrodes.

Additional parallel branches may be used. In another embodiment the parallel branches, or a conduit with a serial arrangement of copper and silver electrodes may be used as a bypass in parallel with part of a main water supply branch wherein no electrodes are provided. In this case, the average current is controlled in proportion to the flow rate in the main branch (plus the flow rate in the bypass if this flow rate is significant compared to the flow rate in the bypass).

Furthermore, although it has been described that the electrode current is monitored, it should be appreciated that alternatively under some circumstances it may be possible to assume that a predetermined electrode current flows. In this case no current monitoring is needed. However, this has the disadvantage that the system will have to be adapted to water supplies of different composition and that temporal variations cannot be accounted for.

Furthermore, although an embodiment has been shown wherein polarity reversal is controlled dependent on cumulatively applied charge, in an alternative embodiment this is done only for that branch with the silver electrodes. Due to the smaller average electrode current this branch has been found to present the most significant reversal problems. In this embodiment the polarity in the branch with the copper electrodes branch may be reversed at a predetermined frequency for example. Due to the higher average electrode current this may not lead to problems under some circumstances. However measuring during a period the cumulative amount of Faraday passed through the copper and silver electrodes indicates at any moment the amount of released copper and silver ions and the left over volume and surface of the copper and silver electrodes.

Furthermore, although an embodiment has been shown wherein the electrodes are located downstream from the flow meter, which has the advantage that ions can be added also to the first water that flows when water drawn downstream, it should be appreciated that alternatively the electrodes may be located upstream from the flow meter. Any configuration of electrodes may be used.

Control circuit 19 may be implemented using a microprocessor programmed to perform adjustment of the average current and to select the time points of polarity reversal. Alternatively, a circuit constructed to perform specifically this adjustment may be used, or a mixture of programmable and dedicated circuits.

## Claims

1. A water supply system comprising
- a conduit coupled between an water input and a water output;
- a pair of silver electrodes located in the conduit;
- an electrode supply circuit coupled to the silver electrodes;
- a flow meter for measuring an indication water flow rate through the water output;
- a control circuit with an input coupled to the flow meter and an output coupled to the electrode supply circuit and configured to control an average current supplied to the silver electrodes in proportion to the indicated water flow rate, and to cause a polarity of a voltage difference applied between the silver electrodes to be reversed each time when the control circuit determines that a charge that has been cumulatively applied to the silver electrodes since a previous polarity reversal has reached a predetermined threshold.

2. A water supply system according to claim 1, comprising at least one variable water drawing device coupled to receive water from the water output.

3. A water supply system according to any one of the preceding claims, wherein the electrode supply circuit is configured to detect an amount of current flowing to the silver electrodes when a voltage difference is applied between the silver electrodes, and wherein the control circuit is configured to control a fraction of time during which the voltage difference is applied, the fraction being controlled in proportion to a ratio between the indicated water flow rate and the detected amount of current.

4. A water supply system according to any one of the preceding claims, comprising a pair of copper electrodes located in a water flow path between the water input and the water output, the control circuit being configured to cause a higher average current to be applied across the copper electrodes than across the silver electrodes and to cause a polarity of reversals of a voltage difference applied across the copper electrodes to be reversed at a higher frequency than reversals of the voltage difference applied across the silver electrodes.

5. A water supply system according to claim 4 wherein the control circuit is configured to control an average current supplied to the copper electrodes in proportion to the indicated water flow rate, and to cause a polarity of a voltage difference applied between the copper electrodes to be reversed each time when a charge that has been cumulatively applied to the copper electrodes since a previous polarity reversal for the copper electrodes has reached a predetermined threshold.

6. A water supply method comprising
- providing a pair of silver electrodes in a water conduit;
- measuring a parameter that is indicative for water flow rate through the conduit;
- controlling an average current supplied to the silver electrodes in proportion to the measured water flow rate;
- repeatedly reversing polarity of a voltage difference applied between the silver electrodes;
- computing a charge that has been cumulatively applied to the silver electrodes since a previous polarity reversal of the voltage difference;
- reversing a polarity of the voltage difference when the computed charge has reached a predetermined threshold.

7. A method according to claim 6, comprising supplying the water from the water conduit to a water distribution system that comprises at least one variable water drawing device.

8. A method according to claim 6 or 7, wherein an amount of current flowing to the silver electrodes is detected when a voltage difference is applied between the silver electrodes the method comprising controlling a fraction of time during which the voltage difference is applied, the fraction being controlled in proportion to a ratio between the indicated water flow rate and the detected amount of current.

9. A method according to claim 6, 7 or 8, comprising
- providing a pair of copper electrodes located in a water flow path between a water input and a water output of the water conduit;
- applying a higher average current across the copper electrodes than across the silver electrodes;
- reversing polarity of a voltage difference applied across the copper electrodes at a higher frequency than reversals of the voltage difference applied across the silver electrodes.

10. A method according to claim 9
- controlling an average current supplied to the copper electrodes in proportion to the measured water flow rate;
- computing a charge that has been cumulatively applied to the copper electrodes since a previous polarity reversal of the voltage difference across the copper electrodes;
- reversing a polarity of the voltage difference across the copper electrodes when the computed charge computed for the copper electrodes has reached a predetermined threshold.
